# EUROPÄISCHE PATENTSCHRIFT

(11) **EP 3 389 834 B1**
(45) Veröffentlichungstag und Bekanntmachung des Hinweises auf die Patenterteilung: **14.04.2021**
(21) Anmeldenummer: 16808929.0
(22) Anmeldetag: 17.11.2016
(51) Int. Cl.: B01D 63/08, B01D 65/00

(54) **EINSPANNVORRICHTUNG FÜR EINE MEHRZAHL VON KASSETTENFILTRATIONSMODULEN**
CLAMPING DEVICE FOR A PLURALITY OF FILTRATION CARTRIDGE MODULES
DISPOSITIF DE SERRAGE POUR UNE PLURALITÉ DE MODULES DE CARTOUCHE À FILTRATION

(30) Priorität: 18.12.2015 DE 102015122261
(43) Veröffentlichungstag der Anmeldung: 24.10.2018
(73) Patentinhaber: Sartorius Stedim Biotech GmbH, 37079 Göttingen (DE)
(72) Erfinder: AJAM, Mohammed Saeed, 44227 Dortmund (DE); SCHÄFER, Jan, 34295 Edermünde (DE)
(74) Vertreter: Vigand, Philippe
(86) Internationale Anmeldenummer: PCT/EP2016/078052
(87) Internationale Veröffentlichungsnummer: WO 2017/102241

(56) Entgegenhaltungen:
- EP-B1- 0 498 211
- WO-A1-98/30308
- DE-B4-102006 009 804
- US-A1- 2013 105 325
- US-A1- 2015 360 180

## Beschreibung

### Gebiet der Erfindung

Die Erfindung betrifft eine Kassetteneinspannvorrichtung, umfassend eine Mehrzahl von Kassettenfiltrationsmodulen, jeweils aufweisend
- eine Verteilerplatte die,
   mindestens einen Feedkanal,
   einen Retentatkanal,
   einen Filtratkanal sowie
   wenigstens eine Anlagefläche
      aufweist,
- eine Spannplatte mit einer Spannfläche sowie
- eine aus mindestens einer Filterkassette bestehende, erste Filterkassettenanordnung, die zwischen der ersten Anlageflächen und der Spannfläche eingespannt ist,
wobei die Kassettenfiltrationsmodule im Bereich ihrer Verteilerplatten übereinander gestapelt sind und über ihre Verteilerplatten in einer Serienschaltung miteinander verbunden sind.

### Stand der Technik

Eine derartige Vorrichtung ist bekannt aus der US 2015/0360180 A1.

Aus der DE 10 2006 009 804 B4 ist eine Kassetteneinspannvorrichtung für Crossflow-Filterkassetten mit einer Mehrzahl von Kassettenfiltrationsmodulen bekannt, die jeweils eine Verteilerplatte mit einem Feedkanal, einem Retentatkanal, einem Filtratkanal und mit mindestens einer ersten Anlagefläche aufweisen, wobei jeweils zwischen der ersten Anlagefläche der Verteilerplatte und einer Spannfläche einer orthogonal zur Anlagefläche über Führungsstangen verschiebbaren Spannplatte eine Filterkassettenanordnung aus mindestens einer Filterkassette spannbar ist. Dabei sind die Kassettenfiltrationsmodule im Bereich ihrer Verteilerplatten übereinander stapelbar. Die im Bereich ihrer Verteilerplatten übereinander gestapelten Kassettenfiltrationsmodule werden in Art einer Parallelschaltung miteinander verbunden. Nachteilig bei der bekannten Vorrichtung, die sich grundsätzlich bewährt hat, ist, dass bei im Wesentlichen gleichem Aufbau der einzelnen Verteilerplatten bei vertikaler Anordnung der Filterkassetten die Filterkassetten nicht auch seriell durchströmt werden können.

Aus der EP 0 498 211 B1 ist eine Kassetteneinspannvorrichtung für Crossflow-Filterkassetten bekannt, bei der beispielsweise vier Kassettenfiltrationsmodule übereinander stapelbar sind. Dabei sind das erste und zweite Modul sowie das zweite und dritte Modul jeweils zueinander parallel und das zweite und dritte Modul zueinander in Reihe (seriell) geschaltet. Nachteilig dabei ist, dass jeweils zwei einander benachbarte Filtrationsmodule unterschiedlich ausgebildet sein müssen. Weiterhin nachteilig bei dieser bekannten Kassetteneinspannvorrichtung ist, dass die Filterkassetten quer zur Stapelrichtung angeordnet sind, d.h., der Feedkanal, der Retentatkanal und die Filtratkanäle der Verteilerplatte sind parallel zur Stapelrichtung der Kassettenfiltrationsmodule angeordnet.

Weiterhin ist aus der DE 20 2014 106 101 U1 eine Kassetteneinspannvorrichtung zur Aufnahme einer vorgebbaren Anzahl von Filterkassetten zwei relativ zueinander auf mindestens einer Führungsschiene verschiebbaren Druckplatte, zwischen die die Filterkassetten einspannbar sind, wobei mindestens eine der Filterkassetten eine Verteilerplatte aufweist. Nachteilig dabei ist, dass die Filterkassetten lediglich in horizontaler Richtung ineinander gereiht werden. Eine parallele Anordnung mehrerer Filtermodule (Filterkassetten mit Verteilerplatten) in horizontaler Ebene oder gar eine Stapelung von Filtermodulen in vertikaler Richtung ist dabei nicht vorgesehen.

Auch aus der US 2013/0306539 A1 ist eine Kassetteneinspannvorrichtung zur Aufnahme von Filterkassetten zwischen zwei relativ zueinander verschiebbaren Druckplatten, zwischen die die Filterkassetten mit mindestens einer Verteilerplatte einspannbar sind, bekannt. Auch hier sind die einzelnen Filterkassetten lediglich singulär in einer horizontalen Längsrichtung aneinander angereiht. Eine parallele Anordnung von Filtermodulen in horizontaler Richtung nebeneinander oder in vertikaler Richtung übereinander gestapelt ist dabei nicht vorgesehen.

Auch aus der WO 98/30308 A1 ist eine Kassetteneinspannvorrichtung zur Aufnahme von Filterkassetten zwischen zwei relativ zueinander verschiebbaren Druckplatten, zwischen die die Filterkassetten mit mindestens einer Verteilerplatte eingespannt sind, bekannt. Dabei weist die Endplatte einen Feedanschluss auf, während die Verteilerplatte einen seitlichen Retentatkanal und seitliche Permeatkanäle aufweist. Auch hier sind die einzelnen Filterkassetten lediglich singulär in einer horizontalen Längsrichtung aneinander angereiht. Eine parallele Anordnung von Filtermodulen in horizontaler Richtung nebeneinander mit einer gemeinsamen Verteilerplatte, die zudem in vertikaler Richtung übereinander stapelbar sind, ist dabei nicht vorgesehen.

Aus der eingangs genannten, gattungsbildenden US 2015/0360180 A1 sind linear erstreckte, aus einer Mehrzahl von zwischen einer Spann- und einer Verteilerplatte räumlich hintereinander angeordneten, funktional miteinander parallelgeschalteten Filterkassetten aufgebaute Crossflow-Kassettenfiltrationsmodule bekannt, die in vertikaler Richtung räumlich übereinander gestapelt und im Bereich ihrer unmittelbar aufeinander gestapelten Verteilerplatten fluidisch miteinander verbunden sind. Mittels Ventilen lässt sich diese fluidische Verbindung der übereinander gestapelten Filterkassettenanordnungen bedarfsweise als eine Serien- oder als eine Parallelschaltung ausgestalten.

Schließlich ist aus der US 2006/0163141 A1 eine Kassetteneinspannvorrichtung für eine Mehrzahl von Filterkassetten mit zwei relativ zueinander auf mindestens einer Führungsschiene verschiebbaren Druckplatten, zwischen die die Filterkassetten eingespannt sind, bekannt. Mindestens eine der Spannplatten ist dabei als eine Verteilerplatte ausgebildet. Auch hierbei sind die Filterkassetten einer horizontalen Längsrichtung singulär aneinander angereiht. Eine parallele Anordnung von Filtermodulen in einer horizontalen oder vertikalen Ebene ist hier ebenfalls nicht vorgesehen.

### Aufgabenstellung

Es ist die Aufgabe der vorliegenden Erfindung, einen produktschonenderen Filtrationsprozess ohne Einsatz von Filterkassetten in Sonderformaten einerseits und mit einer effizienteren Nutzung von Pumpenleistung andererseits zu ermöglichen.

### Darlegung der Erfindung

Diese Aufgabe wird in Verbindung mit den Merkmalen des Oberbegriffs von Anspruch 1 dadurch gelöst, dass die Spannplatte jedes Kassettenfiltrationsmoduls über Führungsstangen orthogonal zur jeweils zugeordneten ersten Anlagefläche verschiebbar ist und jedes Kassettenfiltrationsmodul eine neben der ersten Filterkassettenanordnung angeordnete, gegen die Anlagefläche gespannte, zweite Filterkassettenanordnung aufweist, wobei die jeweils nebeneinander angeordneten Filterkassettenanordnungen über ihre zugeordnete, als gemeinsame Verteilerplatte ausgebildete Verteilerplatte in Parallelschaltung miteinander verbunden sind.

Durch die nebeneinander angeordneten Filterkassettenanordnungen, die über die Verteilerplatte jeweils in einer Parallelschaltung miteinander verbunden sind, wird jeweils die Anströmbreite verdoppelt, wobei marktgängige Filterkassetten verwendet werden können. Dadurch lassen sich Filterkassetten, beispielsweise Crossflow-Filterkassetten, ohne Änderung ihrer Geometrie wie Filterkassetten mit größerem Format verwenden. Dadurch, dass die übereinander stapelbaren Kassettenfiltrationsmodule über ihre Verteilerplatten in einer Serienschaltung miteinander verbindbar sind, wird durch die Stapelung der Strömungsweg entsprechend verlängert. Ein weiterer Vorteil der Kassetteneinspannvorrichtung ist, dass bei Vergrößerung des Stapels innerhalb bestimmter Grenzen die Pumpenleistung und somit die Dimension von Feed- und Retentat-Verrohrung nicht vergrößert werden müssen.

Mit dieser Kassetteneinspannvorrichtung kann eine bestimmte Produktkonzentration bei weniger Produktzirkulation erzielt werden. Somit kann mit dieser Kassetteneinspannvorrichtung ein Filtrationsprozess produktschonender erfolgen. Durch die Kombination von Serienschaltung und paralleler Anordnung der Filterkassettenanordnungen stehen eine Art großflächige Filterkassetten, die aus Standardkassetten zusammengebaut sind, zur Verfügung, wodurch die Nachteile von großen Filterkassetten in Sonderformaten vermieden werden, da beim Ausfall einer großflächigen Filterkassette die Kosten höher als bei Standardkassetten sind. Mit dieser Kassetteneinspannvorrichtung kann zudem die Pumpenleistung für die Durchströmung der Filterkassetten effizienter genutzt werden. Schließlich werden die Verteilerplatten und ihre Verbindungen erheblich vereinfacht, da jeweils für die parallel nebeneinander angeordneten Filterkassettenanordnungen eine gemeinsame Verteilerplatte verwendet wird.

Gemäß einer bevorzugten Ausführungsform der Erfindung weist die Verteilerplatte auf ihrer der ersten Anlagefläche abgewandten Rückseite eine zweite Anlagefläche für zwei weitere nebeneinander anordenbare und gegen die zweite Anlagefläche spannbare Filterkassettenanordnungen auf. Damit kann eine Verteilerplatte für jeweils zwei Filterkassettenanordnungen auf beiden Anlagenflächen genutzt werden.

Nach einer weiteren bevorzugten Ausführungsform der Erfindung wird die Verteilerplatte quer zur Stapelrichtung durch eine erste und eine zweite Seitenfläche seitlich begrenzt, wobei jede der in Stapelrichtung parallel zueinander verlaufenden Seitenflächen mindestens einen Filtratauslass aufweist. Dadurch kann insbesondere die Integritätsbestimmung an jedem Kassettenfiltrationsmodul separat durchgeführt werden.

Nach einer weiteren bevorzugten Ausführungsform der Erfindung wird die Verteilerplatte in Stapelrichtung nach unten durch eine quer zur Stapelrichtung verlaufende untere Seitenfläche und in Stapelrichtung nach oben durch eine quer zur Stapelrichtung verlaufende obere Seitenfläche seitlich begrenzt, wobei die untere Seitenfläche einen Feedanschluss für zu filtrierendes Fluid und die obere Seitenfläche einen Retentatanschluss für abzuführendes Retentat aufweist.

Der Feedkanal, der Retentatkanal und die Filtratkanäle der Verteilerplatte sind quer zur Stapelrichtung angeordnet, wobei der Feedkanal mit einer Mehrzahl von in einer Linie angeordneten Feedzuführungen, der Retentatkanal mit einer Mehrzahl von in einer Linie angeordneten Retentatauslässen und die Filtratkanäle mit einer Mehrzahl von in einer Linie angeordneten Filtratauslässen, angeordnet sind, und wobei die Feedzuführungen, die Retentatauslässe und die Filtratauslässe über Öffnungen an den Anlageflächen der Verteilerplatte mit Öffnungen anliegender Filterkassetten korrespondieren.

Der Retentatkanal und der Feedkanal einander (in Stapelrichtung) benachbarter Verteilerplatten sind jeweils über einen in Stapelrichtung verlaufenden Verbindungskanal miteinander verbindbar.

Gemäß einer weiteren bevorzugten Ausführungsform der Erfindung weist die in Stapelrichtung unterste Verteilerplatte den Feedanschluss für eine Fluidzuleitung auf, wobei der Feedanschluss über einen in Stapelrichtung nach oben verlaufenden Verbindungskanal mit dem Feedkanal der untersten Verteilerplatte verbunden ist. Entsprechend weist die in Stapelrichtung oberste Verteilerplatte den Retentatanschluss für eine Retentatableitung auf, wobei der Retentatanschluss über einen in Stapelrichtung nach unten verlaufenden Verbindungskanal mit dem Retentatkanal der obersten Verteilerplatte verbunden ist.

Gemäß einer bevorzugten Ausführungsform der Erfindung sind mindestens zwei Kassettenfiltrationsmodule im Bereich ihrer Verteilerplatten übereinander gestapelt.

Nach einer weiteren bevorzugten Ausführungsform der Erfindung sind drei Kassettenfiltrationsmodule im Bereich ihrer Verteilerplatten übereinander gestapelt.

Weitere Merkmale und Vorteile der Erfindung ergeben sich aus der nachfolgenden speziellen Beschreibung und den Zeichnungen.

### Kurzbeschreibung der Zeichnungen

Es zeigen:

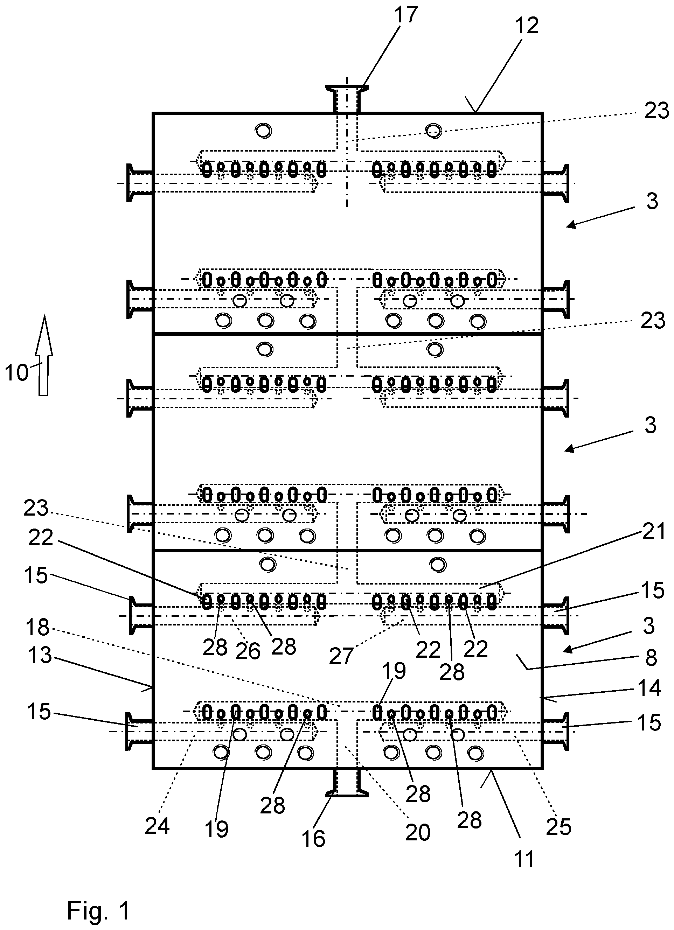

- Figur 1:: eine Vorderansicht dreier übereinander gestapelter Verteilerplatten mit mittig an der unteren Seitenfläche der untersten Verteilerplatte angeordnetem Feedanschluss und einem an der oberen Seitenfläche der obersten Verteilerplatte mittig angeordneten Retentatanschluss;

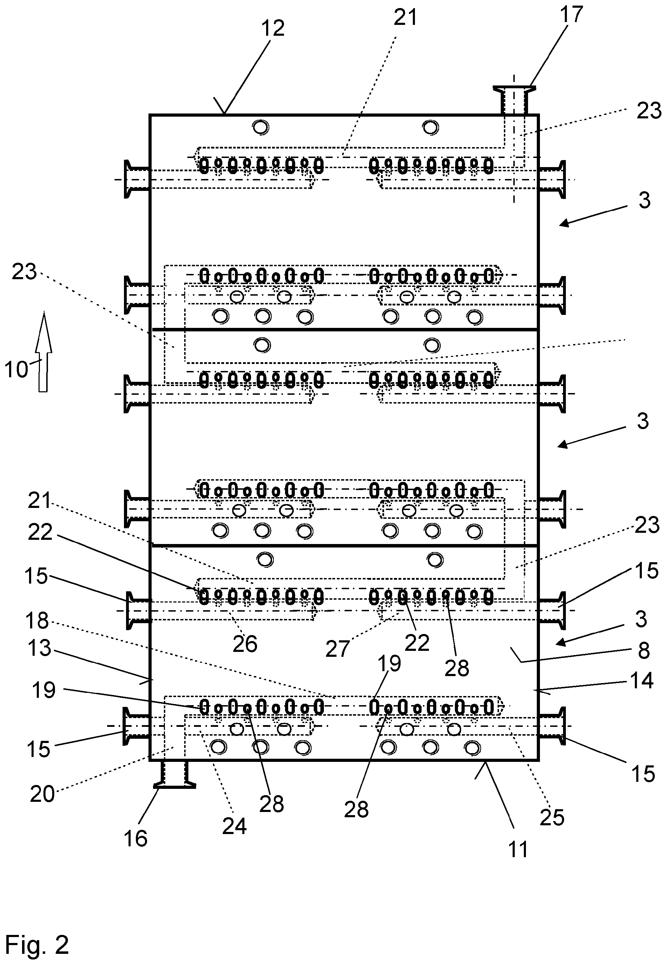

- Figur 2:: eine Vorderansicht dreier weiterer übereinander gestapelter Verteilerplatten mit seitlich an der unteren Seitenfläche der untersten Verteilerplatte angeordneter Feedanschluss und mit seitlich an der oberen Seitenfläche der obersten Verteilerplatte angeordneten Retentatanschluss;

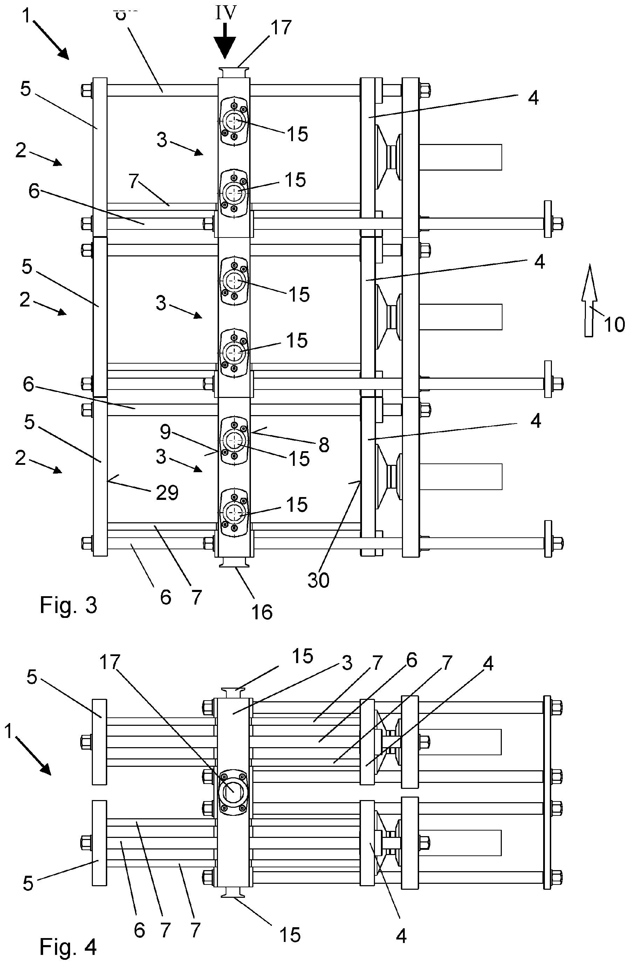

- Figur 3:: eine Seitenansicht einer Kassetteneinspannvorrichtung für Crossflow-Filterkassetten mit drei in Stapelrichtung übereinander gestapelten Kassettenfiltrationsmodulen;
- Figur 4:: eine Draufsicht auf die Kassetteneinspannvorrichtung von Figur 3 aus Richtung IV;

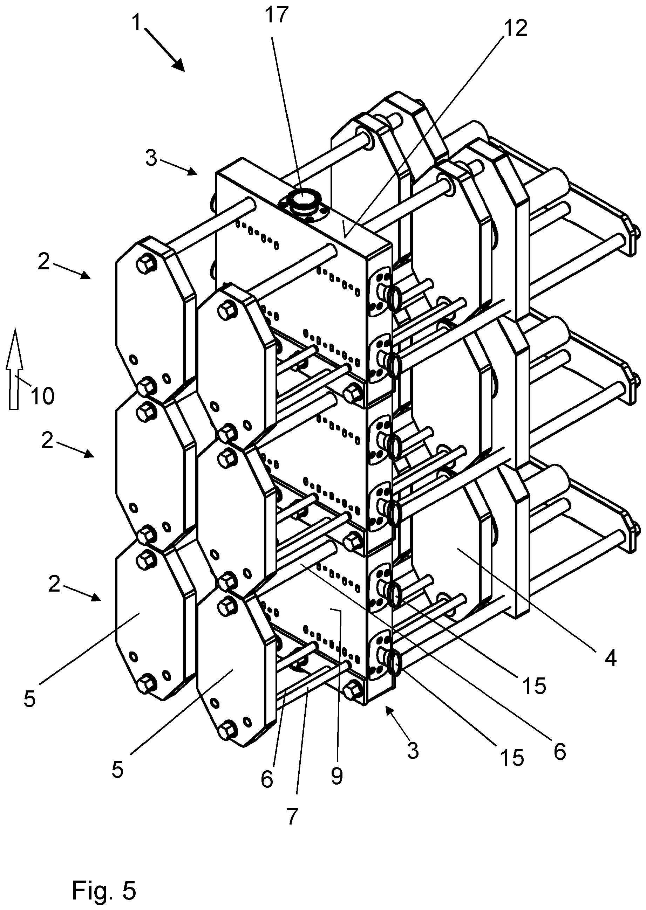

- Figur 5:: eine räumliche Darstellung der Kassetteneinspannvorrichtung von Figur 3; und

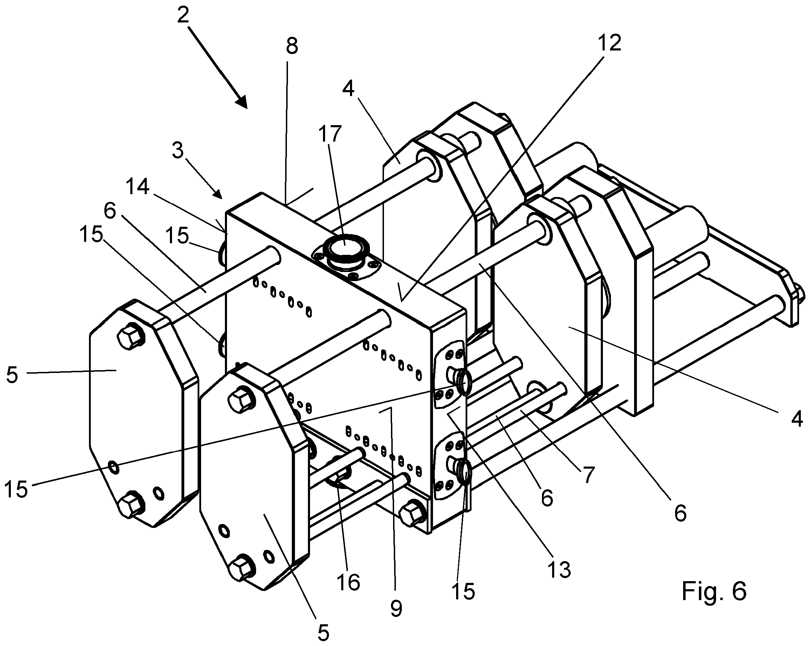

- Figur 6:: eine räumliche Darstellung einer Kassetteneinspannvorrichtung.

### Beschreibung bevorzugter Ausführungsformen

Eine Kassetten-Einspannvorrichtung 1 für eine Crossflow-Kassettenfiltrationsanlage besteht im Wesentlichen aus Kassettenfiltrationsmodulen 2 die im Bereich ihrer Verteilerplatten 3 übereinander gestapelt sind.

Das Kassettenfiltrationsmodul 2 besteht im Wesentlichen aus der Verteilerplatte 3 und zu beiden Seiten der Verteilerplatte 3 angeordneten nicht dargestellten Kassettenfiltern, die von Spannplatten 4, 5 mit Spannflächen 29, 30 gegen den Kassettenfiltern zugewandte Anlageflächen 8, 9 der Verteilerplatte 3 gedrückt werden. Die Spannplatten 4, 5 sind über Führungsstangen 6, 7 mit der Verteilerplatte 3 verbunden.

Die Verteilerplatte 3 ist jeweils als gemeinsame Verteilerplatte für zwei nebeneinander anordenbare und gegen die Anlageflächen 8, 9 spannbare Filterkassettenanordnungen ausgebildet. Dabei sind die nebeneinander anordenbaren Filterkassettenanordnungen über die gemeinsame Verteilerplatte 3 in einer Parallelschaltung miteinander verbindbar.

Die Verteilerplatte 3 ist in Stapelrichtung 10 nach unten, d. h. entgegengesetzt zur Stapelrichtung 10, durch eine quer zur Stapelrichtung 10 verlaufende untere Seitenfläche 11 und in Stapelrichtung 10 nach oben durch eine quer zur Stapelrichtung 10 verlaufende obere Seitenfläche 12 seitlich begrenzt. Die Verteilerplatte 3 wird quer zur Stapelrichtung 10 durch eine erste Seitenfläche 13 und parallel zur ersten Seitenfläche 13 durch eine zweite Seitenfläche 14 seitlich begrenzt. Auf ihrer Vorderseite weist die Verteilerplatte 3 die erste Anlagefläche 8 und auf ihrer der Vorderseite abgewandten Rückseite die zweite Anlagefläche 9 auf. Jede der in Stapelrichtung 10 parallel zueinander verlaufenden Seitenflächen 13, 14 weist zwei Filtratanschlüsse 15 auf.

Die untere Seitenfläche 11 der in Stapelrichtung 10 unteren Verteilerplatte 3 weist einen Feedanschluss 16 für zu filtrierendes Fluid und die obere Seitenfläche 12 der in Stapelrichtung 10 obersten Verteilerplatte 3 weist einen Retentatanschluss 17 für abzuführendes Retentat auf.

Die Verteilerplatte 3 weist bei vertikaler Stapelrichtung 10 in ihrem unteren Bereich einen horizontalen Feedkanal 18 auf. Vom Feedkanal 18 führen jeweils zur ersten Anlagefläche 8 und zur zweiten Anlagefläche 9 der Verteilerplatte 3 Feedzuführungen 19 hin. Die Öffnungen der Feedzuführungen 19 verlaufen in einer quer zur Stapelrichtung 10 verlaufenden Linie. In Stapelrichtung 10 verläuft ein erster Verbindungskanal 20 der den Feedkanal 18 mit dem Feedanschluss 16 verbindet. Im in vertikaler Stapelrichtung 10 oberen Bereich ist parallel zum Feedkanal 18 ein Retentatkanal 21 angeordnet. Der Retentatkanal 21 ist mit Retentatauslässen 22 verbunden, die auf der ersten Anlagefläche 8 und auf der zweiten Anlagefläche 9 jeweils in einer horizontalen Linie bzw. Reihe angeordnet sind. Über einen zweiten Verbindungskanal 23, der ebenfalls in Stapelrichtung 10 verläuft ist der Retentatkanal 21 mit dem ersten Verbindungskanal 20 der benachbarten Verteilerplatte 3 verbunden.

Im unteren Bereich der Verteilerplatte 3 sind parallel zum Feedkanal 18 von den Seitenflächen 13, 14 her jeweils ein erster unterer Filtratkanal 24 und ein zweiter unterer Filtratkanal 25 angeordnet. Im oberen Bereich der Verteilerplatte 3 sind entsprechend parallel zu dem Retentatkanal 21 von den Seitenflächen 13, 14 her ein dritter oberer Filtratkanal 26 und ein vierter oberer Filtratkanal 27 angeordnet. Die Filtratkanäle 24, 25, 26, 27 sind mit Filtratauslässen 28, die jeweils auf der ersten Anlagefläche 8 und auf der zweiten Anlagefläche 9 der Verteilerplatte 3 in einer horizontalen Linie bzw. Reihe angeordnet sind, verbunden. Die Filtratkanäle 24, 25.26, 27 ihrerseits sind jeweils mit den seitlich an der Verteilerplatte 3 angeordneten Filtratanschlüssen 15 verbunden. Grundsätzlich können die ersten und zweiten unteren Filtratkanäle 24, 25 wie auch die dritten und vierten oberen Filtratkanäle 26, 27 ineinander übergehen, wobei für die unteren Filtratkanäle 24, 25 und die oberen Filtratkanäle 26, 27 jeweils nur ein seitlicher Filtratanschluss 15 benötigt wird.

Die Feedzuführungen 19, die Retentatauslässe 22 und die Filtratauslässe 15 korrespondieren mit ihren an den Anlageflächen 8, 9 der Verteilerplatte 3 angeordneten Öffnungen mit entsprechenden Öffnungen anliegender Filterkassetten.

Die übereinander gestapelten Kassettenfiltrationsmodule 2 sind über ihre Verteilerplatten 3 in einer Serienschaltung miteinander verbunden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Kassetten-Einspannvorrichtung
- 2: Kassettenfiltrationsmodul
- 3: Verteilerplatte
- 4: Spannplatten
- 5: Spannplatten
- 6: Führungsstangen
- 7: Führungsstangen
- 8: Anlagefläche von 3
- 9: Anlagefläche von 3
- 10: Stapelrichtung
- 11: untere Seitenfläche von 3
- 12: obere Seitenfläche von 3
- 13: erste Seitenfläche von 3
- 14: zweite Seitenfläche von 3
- 15: Filtratanschluss von 13, 14
- 16: Feedanschluss von 11
- 17: Retentatanschluss von 12
- 18: Feedkanal von 3
- 19: Feedzuführung von 18
- 20: erster Verbindungskanal von 3
- 21: Retentatkanal von 3
- 22: Retentatauslass von 21
- 23: zweiter Verbindungskanal von 3
- 24: erster Filtratkanal von 3
- 25: zweiter Filtratkanal von 3
- 26: dritter Filtratkanal von 3
- 27: vierter Filtratkanal von 3
- 28: Filtratauslass von 24, 25, 26, 27
- 29: Spannfläche von 4
- 30: Spannfläche von 5

## Patentansprüche

1. Kassetteneinspannvorrichtung (1), umfassend eine Mehrzahl von Kassettenfiltrationsmodulen (2), jeweils aufweisend
- eine Verteilerplatte (3) die,
mindestens einen Feedkanal (18),
einen Retentatkanal (21),
einen Filtratkanal (24, 25, 26, 27) sowie
wenigstens eine erste Anlagefläche (8)
aufweist,
- eine Spannplatte (4, 5) mit einer Spannfläche (29, 30) sowie
- eine aus mindestens einer Filterkassette bestehende, erste Filterkassettenanordnung, die zwischen der ersten Anlagefläche (8) und der Spannfläche (29, 30) eingespannt ist,
wobei die Kassettenfiltrationsmodule (2) im Bereich ihrer Verteilerplatten (3) übereinander gestapelt sind und über ihre Verteilerplatten (3) in einer Serienschaltung miteinander verbunden sind,
**dadurch gekennzeichnet,**
**dass** die Spannplatte (4, 5) jedes Kassettenfiltrationsmoduls (2) über Führungsstangen (6, 7) orthogonal zur jeweils zugeordneten ersten Anlagefläche (8) verschiebbar ist und
jedes Kassettenfiltrationsmodul (2) eine neben der ersten Filterkassettenanordnung angeordnete, ebenfalls gegen die erste Anlagefläche (8) gespannte, zweite Filterkassettenanordnung aufweist, wobei die jeweils nebeneinander angeordneten Filterkassettenanordnungen über ihre zugeordnete, als gemeinsame Verteilerplatte ausgebildete Verteilerplatte (3) in Parallelschaltung miteinander verbunden sind.

2. Kassetteneinspannvorrichtung nach Anspruch 1,
**dadurch gekennzeichnet,**
**dass** die Verteilerplatte (3) auf ihrer der ersten Anlagefläche (8) abgewandten Rückseite eine zweite Anlagefläche (9) für zwei weitere nebeneinander angeordnete und gegen die zweite Anlagefläche (9) gespannte Filterkassettenanordnungen aufweist.

3. Kassetteneinspannvorrichtung nach Anspruch 1 oder 2,
**dadurch gekennzeichnet,**
**dass** die Verteilerplatte (3) quer zur Stapelrichtung (10) durch eine erste Seitenfläche (13) und eine zweite Seitenfläche (14) seitlich begrenzt wird und dass jede der in Stapelrichtung (10) parallel zueinander verlaufenden Seitenflächen (13, 14) mindestens einen Filtratanschluss (15) aufweist.

4. Kassetteneinspannvorrichtung nach einem der Ansprüche 1 bis 3,
**dadurch gekennzeichnet,**
**dass** die Verteilerplatte (3) in Stapelrichtung (10) nach unten durch eine quer zur Stapelrichtung (10) verlaufende untere Seitenfläche (11) und in Stapelrichtung (10) nach oben durch eine quer zur Stapelrichtung (10) verlaufende obere Seitenfläche (12) seitlich begrenzt wird und
**dass** die untere Seitenfläche (11) einen Feedanschluss (16) für zu filtrierendes Fluid und die obere Seitenfläche einen Retentatanschluss (17) für abzuführendes Retentat aufweist.

5. Kassetteneinspannvorrichtung nach einem der Ansprüche 1 bis 4,
**dadurch gekennzeichnet,**
**dass** der Feedkanal (18), der Retentatkanal (21) und die Filtratkanäle (24, 25, 26, 27) der Verteilerplatte (3) quer zur Stapelrichtung (10) angeordnet sind, dass der Feedkanal (18) mit einer Mehrzahl von in einer Linie angeordneten Feedzuführungen (19), der Retentatkanal (21) mit einer Mehrzahl von in einer Linie angeordneten Retentatauslässen (22) und die Filtratkanäle (24, 25, 26, 27) mit einer Mehrzahl von in einer Linie angeordneten Filtratauslässen (28), angeordnet sind, und
**dass** die Feedzuführungen (19), die Retentatauslässe (22) und die Filtratauslässe (28) über Öffnungen an den Anlageflächen (8, 9) der Verteilerplatte (3) mit Öffnungen anliegender Filterkassetten korrespondieren.

6. Kassetteneinspannvorrichtung nach einem der Ansprüche 1 bis 5,
**dadurch gekennzeichnet,**
**dass** der Retentatkanal (21) und der Feedkanal (18) einander benachbarter Verteilerplatten (3) jeweils über einen in Stapelrichtung (10) verlaufenden Verbindungskanal (23) miteinander verbindbar sind.

7. Kassetteneinspannvorrichtung nach einem der Ansprüche 4 bis 6,
**dadurch gekennzeichnet,**
**dass** die in Stapelrichtung (10) unterste Verteilerplatte (3) den Feedanschluss (16) für eine Fluidzuleitung aufweist und
**dass** der Feedanschluss (16) über einen in Stapelrichtung (10) nach oben verlaufenden Verbindungskanal (20) mit dem Feedkanal (18) der untersten Verteilerplatte (3) verbunden ist.

8. Kassetteneinspannvorrichtung nach einem der Ansprüche 4 bis 7,
**dadurch gekennzeichnet,**
**dass** die in Stapelrichtung (10) oberste Verteilerplatte (3) den Retentatanschluss (17) für eine Retentatableitung aufweist und
**dass** der Retentatanschluss (17) über einen in Stapelrichtung (10) nach unten verlaufenden Verbindungskanal (23) mit dem Retentatkanal (21) der obersten Verteilerplatte (3) verbunden ist.

## Claims

1. A cartridge clamping device (1), comprising a plurality of cartridge filtration modules (2), each having
- a distributor plate (3) having
at least one feed channel (18),
a retentate channel (21),
a filtrate channel (24, 25, 26, 27) and
at least one first contact surface (8),
- a clamping plate (4, 5) with a clamping surface (29, 30) and
- a first cartridge arrangement consisting of at least one filter cartridge, which is clamped between the first contact surface (8) and the clamping surface (29, 30),
wherein the cartridge filtration modules (2) are stacked on top of one another in the region of their distributor plates (3) and are connected in series to one another via their distributor plates (3),
**characterized in**
**that** the clamping plate (4, 5) of each cartridge filtration module (2) can be moved orthogonally to the respective assigned first contact surface (8) via guiding rods (6, 7) and
each cartridge filtration module (2) has a second filter cartridge arrangement arranged next to the first filter cartridge arrangement, likewise clamped against the first contact surface (8), wherein the respective filter cartridge arrangements arranged next to each other are connected in parallel to one another via their assigned distributor plate (3) configured as a common distributor plate.

2. The cartridge clamping device according to claim 1, **characterized in**
**that** the distributor plate (3) has a second contact surface (9) on its rear side averted from the first contact surface (8) for two further filter cartridge arrangements arranged next to each other and clamped against the second contact surface (9).

3. The cartridge clamping device according to claim 1 or 2,
**characterized in**
**that** the distributor plate (3) is laterally delimited transversely to the stacking direction (10) by a first lateral surface (13) and a second lateral surface (14) and
**that** each of the lateral surfaces (13, 14) running parallel to each other in the stacking direction (10) has at least one filtrate connection (15).

4. The cartridge clamping device according to any of claims 1 to 3,
**characterized in**
**that** the distributor plate (3) is laterally delimited downward in the stacking direction (10) by a lower lateral surface (11) running transversely to the stacking direction (10) and is laterally delimited upwards in the stacking direction (10) by an upper lateral surface (12) running transversely to the stacking direction (10) and
**that** the lower lateral surface (11) has a feed connection (16) for the fluid to be filtered and the upper lateral surface has a retentate connection (17) for retentate to be discharged.

5. The cartridge clamping device according to any of claims 1 to 4,
**characterized in**
**that** the feed channel (18), the retentate channel (21) and the filtrate channels (24, 25, 26, 27) of the distributor plate (3) are arranged transversely to the stacking direction (10),
**that** the feed channel (18) is arranged with a plurality of feed guides (19) arranged in a line, the retentate channel (21) is arranged with a plurality of retentate outlets (22) arranged in a line and the filtrate channels (24, 25, 26, 27) are arranged with a plurality of filtrate outlets (28) arranged in a line, and
**that** the feed guides (19), the retentate outlets (22) and the filtrate outlets (28) correspond via openings on the contact surfaces (8, 9) of the distributor plate (3) to openings of adjacent filter cartridges.

6. The cartridge clamping device according to any of claims 1 to 5,
**characterized in**
**that** the retentate channel (21) and the feed channel (18) of distributor plates (3) adjacent to each other are each connectable to each other via a connection channel (23) running in the stacking direction (10).

7. The cartridge clamping device according to any of claims 4 to 6,
**characterized in**
**that** the lowest distributor plate (3) in the stacking direction (10) has the feed connection (16) for a fluid supply line and
**that** the feed connection (16) is connected to the feed channel (18) of the lowest distributor plate (3) via a connection channel (20) running upward in the stacking direction (10).

8. The cartridge clamping device according to any of claims 4 to 7,
**characterized in**
**that** the uppermost distributor plate (3) in the stacking direction (10) has the retentate connection (17) for a retentate discharge and
**that** the retentate connection (17) is connected to the retentate channel (21) of the uppermost distributor plate (3) via a connection channel (23) running downward in the stacking direction (10).

## Revendications

1. Dispositif de serrage de cassettes (1), qui comprend une pluralité de modules de filtration de cassettes (2), qui présentent respectivement
- une plaque de distribution (3) qui présente au moins un canal d'alimentation (18),
un canal de rétentat (21),
un canal de filtrat (24, 25, 26, 27), ainsi que au moins une première surface d'appui (8),
- une plaque de serrage (4, 5) avec une surface de serrage (29, 30), ainsi que
- un premier agencement de cassettes de filtre constitué d'au moins une cassette de filtre, qui est serré entre la première surface d'appui (8) et la surface de serrage (29, 30),
dans lequel les modules de filtration de cassettes (2) sont empilés les uns sur les autres dans la région de leurs plaques de distribution (3) et sont reliés ensemble dans un montage en série via leurs plaques de distribution (3),
**caractérisé en ce**
**que** la plaque de serrage (4, 5) de chaque module de filtration de cassettes (2) est déplaçable via des tiges de guidage (6, 7) perpendiculaires à la première surface d'appui (8) respectivement attribuée et
chaque module de filtration de cassettes (2) présente un deuxième agencement de cassettes de filtre agencé à côté du premier agencement de cassettes de filtre et également serré contre la première surface d'appui (8), dans lequel les agencements de cassettes de filtre agencés respectivement les uns à côté des autres sont reliés ensemble dans un montage parallèle via leur plaque de distribution (3) formée en tant que plaque de distribution commune.

2. Dispositif de serrage de cassettes selon la revendication 1,
**caractérisé en ce**
**que** la plaque de distribution (3) présente sur son verso opposé à la première surface d'appui (8) une seconde surface d'appui (9) pour deux autres agencements de cassettes de filtre agencés l'un à côté de l'autre et serrés contre la seconde surface d'appui (9).

3. Dispositif de serrage de cassettes selon la revendication 1 ou 2,
**caractérisé en ce**
**que** la plaque de distribution (3) est latéralement délimitée transversalement à la direction d'empilement (10) par une première surface latérale (13) et une seconde surface latérale (14), et
**que** chacune des surfaces latérales (13, 14) qui se déroulent parallèlement l'une à l'autre dans la direction d'empilement (10) présente au moins un raccordement de filtrat (15).

4. Dispositif de serrage de cassettes selon l'une des revendications 1 à 3,
**caractérisé en ce**
**que** la plaque de distribution (3) est latéralement délimitée vers le bas par une surface latérale (11) inférieure qui se déroule transversalement à la direction d'empilement (10) et dans la direction d'empilement (10) vers le haut par une surface latérale (12) supérieure qui se déroule transversalement à la direction d'empilement (10), et
**que** la surface latérale (11) inférieure présente un raccordement d'alimentation (16) pour un fluide à filtrer et la surface latérale supérieure présente un raccordement de rétentat (17) pour un rétentat à évacuer.

5. Dispositif de serrage de cassettes selon l'une des revendications 1 à 4,
**caractérisé en ce**
**que** le canal d'alimentation (18), le canal de rétentat (21) et les canaux de filtrat (24, 25, 26, 27) de la plaque de distribution (3) sont agencés transversalement à la direction d'empilement (10),
**que** le canal d'alimentation (18) est agencé avec une pluralité d'amenées d'alimentation (19) agencées en ligne, le canal de rétentat (21) est agencé avec une pluralité de sorties de rétentat (22) agencées en ligne et les canaux de filtrat (24, 25, 26, 27) sont agencés avec une pluralité de sorties de filtrat (28) agencées en ligne, et
**que** les amenées d'alimentation (19), les sorties de rétentat (22) et les sorties de filtrat (28) correspondent via des ouvertures contre les surfaces d'appui (8, 9) de la plaque de distribution (3) à des ouvertures de cassettes de filtre adjacentes.

6. Dispositif de serrage de cassettes selon l'une des revendications 1 à 5,
**caractérisé en ce**
**que** le canal de rétentat (21) et le canal d'alimentation (18) de plaques de distribution (3) voisines l'une de l'autre peuvent être respectivement reliés ensemble via un canal de liaison (23) qui se déroule dans la direction d'empilement (10).

7. Dispositif de serrage de cassettes selon l'une des revendications 4 à 6,
**caractérisé en ce**
**que** la plaque de distribution (3) la plus en bas dans la direction d'empilement (10) présente le raccordement d'alimentation (16) pour une arrivée de fluide et
**que** le raccordement d'alimentation (16) est relié au canal d'alimentation (18) de la plaque de distribution (3) la plus en bas via un canal de liaison (20) qui se déroule vers le haut dans la direction d'empilement (10).

8. Dispositif de serrage de cassettes selon l'une des revendications 4 à 7,
**caractérisé en ce**
**que** la plaque de distribution (3) la plus en haut dans la direction d'empilement (10) présente le raccordement de rétentat (17) pour une évacuation de rétentat et
**que** le raccordement de rétentat (17) est relié au canal de rétentat (21) de la plaque de distribution (3) la plus en haut via un canal de liaison (23) qui se déroule vers le bas dans la direction d'empilement (10).
